# EUROPEAN PATENT SPECIFICATION

(11) **EP 2 555 080 B1**
(45) Date of publication and mention of the grant of the patent: **17.07.2013**
(21) Application number: 11176714.1
(22) Date of filing: 05.08.2011
(51) Int. Cl.: G06F 1/16

(54) **Handheld electonic device having a flexible display**
Tragbare elektronische Vorrichtung mit einer flexiblen Anzeige
Dispositif électronique portable doté d'un affichage souple

(43) Date of publication of application: 06.02.2013
(73) Proprietor: Research In Motion Limited, Waterloo, ON N2L 3W8 (CA)
(72) Inventor: Ladouceur, Norman Miner, Waterloo, Ontario N2L 3W8 (CA); Griffin, Jason Tyler, Waterloo, Ontario N2L 3W8 (CA)
(74) Representative: Noble, Nicholas

(56) References cited:
- EP-A1- 1 713 236
- WO-A1-2007/005506
- US-A1- 2003 104 850
- US-A1- 2005 132 292
- US-A1- 2009 156 264

## Description

### Field

This disclosure relates generally to handheld electronic devices and, more particularly, to handheld electronic devices having a flexible display.

### Background Information

Numerous types of handheld electronic devices are known. Examples of such handheld electronic devices include, for instance, personal data assistants (PDAs), handheld computers, two-way pagers, mobile telephones, and the like. Some handheld electronic devices feature wireless communication capabilities. Other handheld electronic devices are stand-alone devices that are functional without communication with other devices.

A typical handheld electronic device has a display supported by a housing. The display is generally a non-flexible component having fixed physical dimensions. In addition to the display, a typical handheld electronic device also includes a user interface area having a keyboard, keypad, touchpad, gamepad, touchscreen, or a combination of such input devices.

Certain applications benefit from either a larger display area or a larger user interface area. Accordingly, some handheld electronic devices such in EP1713236, are designed to cover and uncover all or portions of the display. Other handheld electronic devices are designed to slide or flip open to uncover all or portions of the user interface area. These designs require the exterior dimensions of the device to change in order to provide a user access to a desired display area or a desired user interface area. While these designs have been generally effective for their intended purposes, the physical dimensions of the display limit the design of the handheld electronic device. A hand held device overcoming these disadvantages is as set out in the appended claims.

### BRIEF DESCRIPTION OF THE DRAWINGS

The accompanying drawings, which are incorporated in and constitute a part of this specification, illustrate several embodiments and, together with the description, serve to explain the disclosed principles. In the drawings:

Fig. 1 is a perspective top view of a handheld electronic device having an input portion in a first position, consistent with disclosed embodiments;

Fig. 2 is a perspective top view of a handheld electronic device having the input portion in a second position, consistent with disclosed embodiments;

Fig. 3A is a perspective top view of a handheld electronic device having an input portion in a first position, according to a first exemplary embodiment;

Fig. 3B is a partially schematic cross-sectional view taken along plane 3B-3B of Fig. 3A;

Fig. 3C is a perspective top view of a handheld electronic device having the input portion in a second position, according to the first exemplary embodiment;

Fig. 3D is a partially schematic cross-sectional view taken along plane 3D-3D of Fig. 3C;

Fig. 4A is a perspective top view of a handheld electronic device having the input portion in a first position, according to a second exemplary embodiment;

Fig. 4B is a perspective top view of a handheld electronic device having the input portion in a second position, according to the second exemplary embodiment;

Fig. 4C is a partially schematic cross-sectional view taken along plane 4C-4C of Fig. 4A;

Fig. 4D is a partially schematic cross-sectional view taken along plane 4D-4D of Fig. 4B;

Fig. 5A is a perspective top view of a handheld electronic device having the input portion in a first position, according to a third exemplary embodiment;

Fig. 5B is a perspective top view of a handheld electronic device having an input portion in a second position, according to the third exemplary embodiment; and

Fig. 5C is a partially schematic cross-sectional view taken along plane 5C-5C of Fig. 5A;

Fig. 5D is a partially schematic cross-sectional view similar to that of Fig. 5A, showing the input portion intermediate to the first and second positions; and

Fig. 5E is a partially schematic cross-sectional view taken along plane 5E-5E of Fig. 5B.

### DETAILED DESCRIPTION

Reference will now be made in detail to exemplary embodiments, examples of which are illustrated throughout the drawings. Wherever possible, the same reference numbers are used in the drawings and the description to refer to the same or like parts.

The disclosure generally relates to a handheld electronic device. Examples of handheld electronic devices include mobile wireless communication devices such as pagers, mobile phones, mobile smart-phones, wireless organizers, personal digital assistants, wireless-enabled notebook computers, and any other known communication device having a keypad.

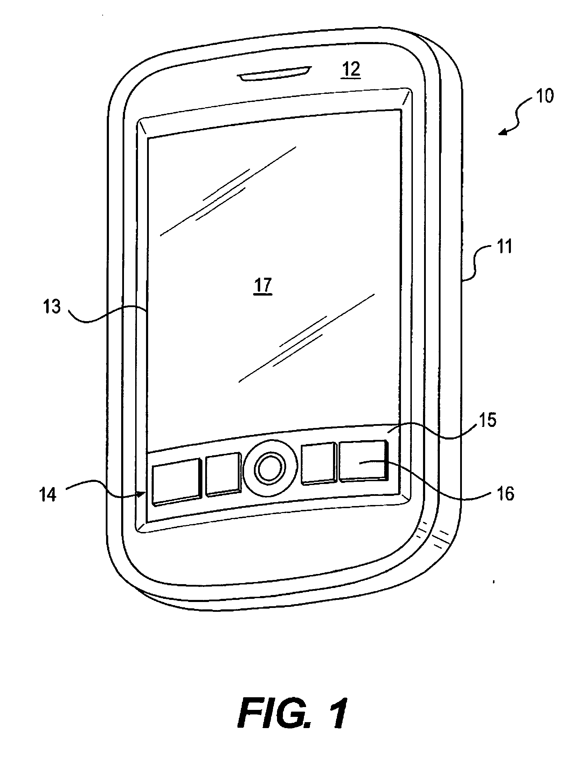

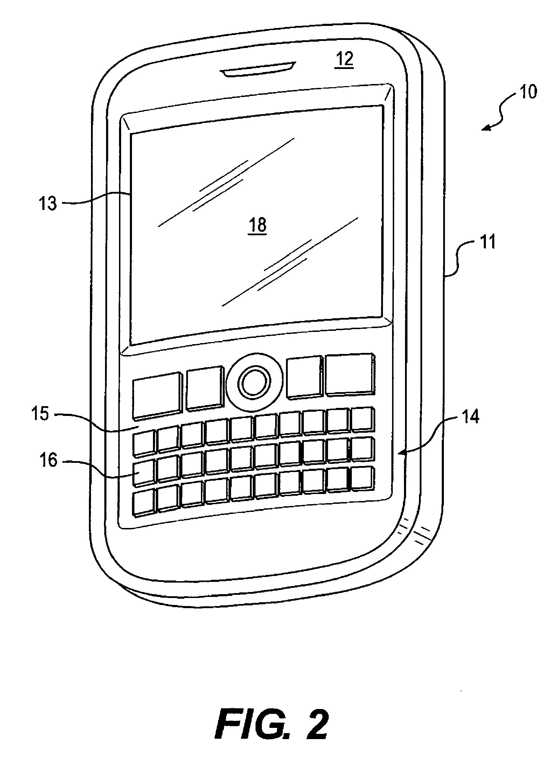

An exemplary handheld electronic device is illustrated generally in Figs. 1 and 2. As shown in Figs. 1 and 2, handheld electronic device 10 has a rigid form factor such as, for example, a bar or brick form factor. That is, handheld electronic device 10 has an exterior with a length dimension, a width dimension, and a height dimension that are fixed so that the exterior dimensions of handheld electronic device 10 are constant.

As illustrated in Fig. 1, handheld electronic device 10 includes a housing 11, and a flexible display 13 and an input portion 14 supported by housing 11. Flexible display 13 includes a flexible organic light-emitting diode (OLED) display, a flexible e-ink display, a flexible liquid crystal display (LCD), or another type of flexible display. Flexible display 13 has a length dimension that is parallel to a length dimension of housing 11. In some embodiments, flexible display may be a touch screen display.

Input portion 14 is linked to flexible display 13. ln the illustrated embodiment depicted in Fig. 2, a largest dimension of input portion 14 is parallel to a width dimension of housing 11. It should be understood, however, that in some embodiments, input portion 14 may be arranged such that a largest dimension of input portion 14 is parallel to a length dimension of housing 11. Input portion 14 has a user interface surface 15 which includes one or more input devices 16. Examples of such input devices 16 include, for example, a keyboard, keypad, touchpad, gamepad, or a track ball, or any other type of input device.

As will be discussed in more detail in each of the exemplary embodiments discussed below, input portion 14 is advantageously movable between a plurality of positions. For instance, input portion 14 can move between a first position illustrated in Fig. 1 and a second position illustrated in Fig. 2. Input portion 14 and flexible display 13 are linked so that, when the input portion 14 is moved from the first position to the second position, flexible display 13 is rearranged and the viewable area of the flexible display 13 is reduced, and vice-versa.

More particularly, when input portion 14 is in the first position shown in Fig. 1, a substantial portion of interface surface 15 of input portion 14 is inaccessible to a user of handheld electronic device 10. In the second position shown in Fig. 2, however, a substantial portion of user interface surface 15 is parallel to a front face 12 of device 10. In this manner, input devices 16 disposed on user interface surface 15 are operable by the user of the handheld electronic device 10.

When input portion 14 is in the first position illustrated in Fig. 1, a substantial portion of flexible display 13 is parallel to the front face 12 of device 10 to define a first viewing area 17. A length dimension of first viewing area 17 substantially corresponds to a length dimension of housing 11. When input portion 14 is in the second position illustrated in Fig. 2, however, flexible display 13 is rearranged to define a second viewing area 18 that is smaller than the first viewing area 17.

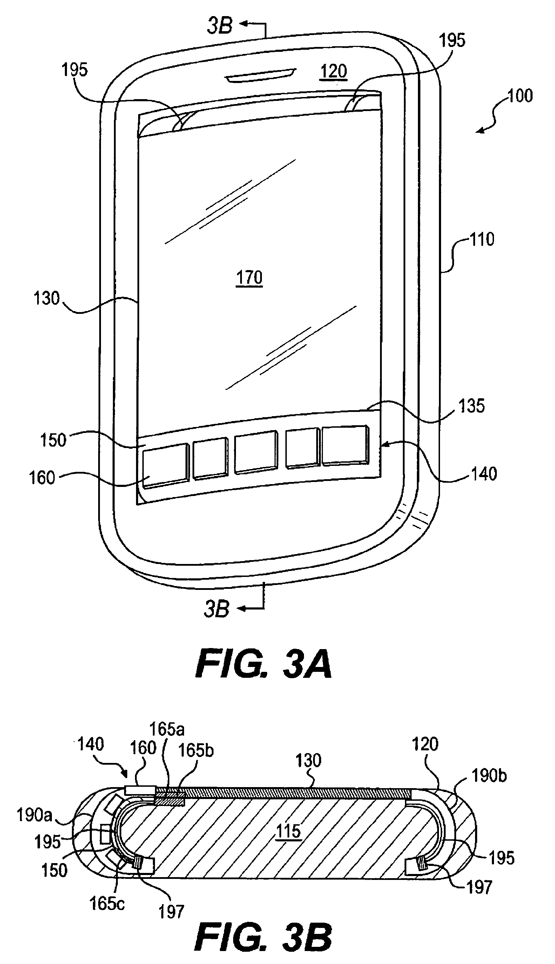

Referring to Figs. 3A-3D, a handheld electronic device 100 in accordance with a first embodiment will be described. Handheld electronic device 100 includes a housing 110, an input portion 140, and a flexible display 130 associated with housing 110. Input portion 140 includes a user interface surface 150 having one or more input devices 160. While the user interface surface 150 of the depicted embodiment includes a keypad, it is contemplated that user interface surface 150 can include one or more other input devices 160 known to one of ordinary skill in the art.

Flexible display 130 and input portion 140 are arranged with respect to housing 110 so as to permit translating movement of flexible display 130 and input portion 140 in a direction parallel to a length dimension of housing 110. An end 135 of flexible display 130 is linked to input portion 140. Accordingly, when input portion 140 is translated, e.g., by the user placing one or more fingers on input portion 140 and manually moving input portion 140 relative to housing 110 in a direction parallel to the length dimension of housing 110, input portion 140 and flexible display 130 translate together in the direction parallel to the length dimension of housing 110. Input portion 140 and flexible display 130 slide on tracks 195 formed in housing 110. It is contemplated, however, that input portion 140 and flexible display 130 may slide within a groove defined by housing 110 or may be guided in their movement relative to housing 110 by any other structural arrangement known to one of ordinary skill in the art.

In this embodiment, housing 110 includes a first recess 190a and a second recess 190b disposed in an interior of housing 110. First recess 190a and second recess 190b are configured to receive a portion of input portion 140 and a portion of flexible display 130, respectively.

As illustrated in Figs. 3A and 3B, a substantial portion of flexible display 130 is parallel to a front face 120 of device 100 to define a first viewing area 170. In some examples, a length dimension of first viewing area 170 substantially corresponds to the length dimension of housing 110. When a substantial portion of flexible display 130 extends across front face 120 of device 100, a substantial portion of input portion 140 is placed within first recess 190a of housing 110.

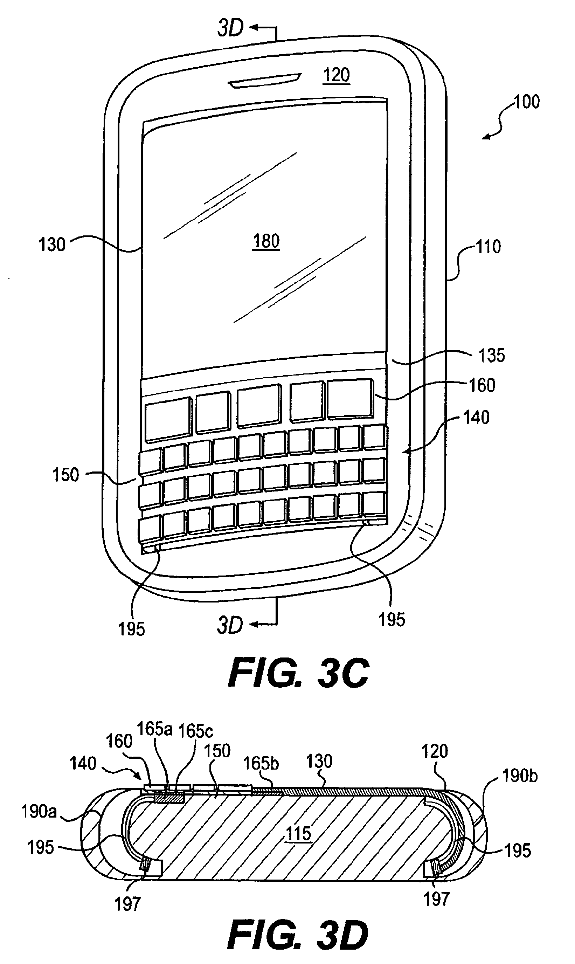

Figs. 3C and 3D depict input portion 140 in a second position, in which a substantial portion of user interface surface 150 of input portion 140 is parallel to front face 120 of device 100. As illustrated in Fig. 3C, flexible display 130 defines a second viewing area 180 that is less than the first viewing area 170. When a substantial portion of user interface surface 150 of input portion 140 extends across front face 120 of device 100, a substantial portion of flexible display 130 is placed within second recess 190b of housing 110.

Handheld electronic device 100 includes a retainer arrangement configured to releasably retain input portion 140 in the first position (Figs. 3A and 3B) and in the second position (Figs. 3C and 3D), respectively. Many retainer arrangements of handheld electronic devices are known to one of ordinary skill in the art and will not be described in detail herein. Any suitable arrangement may be used. In one example, the retainer arrangement includes a first magnet 165b and a second magnet 165c that are configured to magnetically couple flexible display 130 and input portion 140, respectively, to a magnet 165a disposed in interior housing 115 when input portion 140 is in the first position (Figs. 3A and 3B) and in the second position (Figs. 3C and 3D). Magnets 165a, 165b, 165c releasably retain input portion 140 and flexible display 130 with respect to housing 110, when input portion 140 is in either the first position (Figs. 3A and 3B) or the second position (Figs. 3C and 3D). In addition, the tracks 195 in housing 110 that guide movement of input portion 140 and flexible display 130 with respect to housing 110, includes stops or limits 197 that prevent movement of input portion 140 beyond the first position (Figs. 3A and 3B) or the second position (Fig. 3C and 3D) after being moved from one position to another.

When a user of the electronic handheld device 100 manually engages either input portion 140 or flexible display 130 and pushes it in a direction parallel to the length dimension of housing 110 with a sufficient force, input portion 140 is moved from the first position (Figs. 3A and 3B) or the second position (Fig. 3C and 3D) so that both input portion 140 and flexible display 130 slide relative to front face 120 of housing 110. In translating input portion 140 from the first position (Figs. 3A and 3B) to the second position (Figs. 3C and 3D), flexible display 130 is displaced into second recess 190b in housing 110.

While the exemplary embodiment of Figs. 3A-3D has an input portion 140 that is movable between a first position in which a substantial portion of input portion 140 is retracted within first recess 190a of housing 110 and a second position in which user interface surface 150 is substantially parallel to front face 120 of device 100, input portion 140 may assume a plurality of positions therebetween. For example, input portion 140 may assume a third position in which input portion 140 is partially retracted into first recess 190a in the interior of housing 110. When input portion 140 is in the third position, flexible display 130 may be partially retracted within second recess 190b in the interior of housing 110 and define a third viewing area that is less than first viewing area 170 and greater than the second viewing area 180 (not shown).

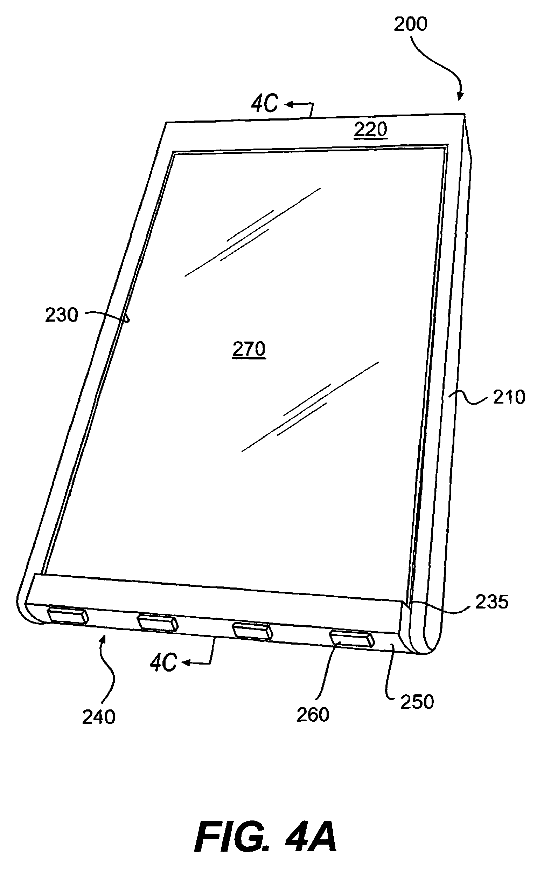

Referring to Figs. 4A-4C, a handheld electronic device 200 in accordance with a second embodiment will be described. Handheld electronic device 200 includes a housing 210, and an input portion 240 and a flexible display 230 associated with housing 210. Input portion 240 is located at one end of housing 210 and includes a user interface surface 250 having one or more input devices 260. It is contemplated that flexible display 230 may be a touch screen and the one or more input devices 260 may be navigations buttons.

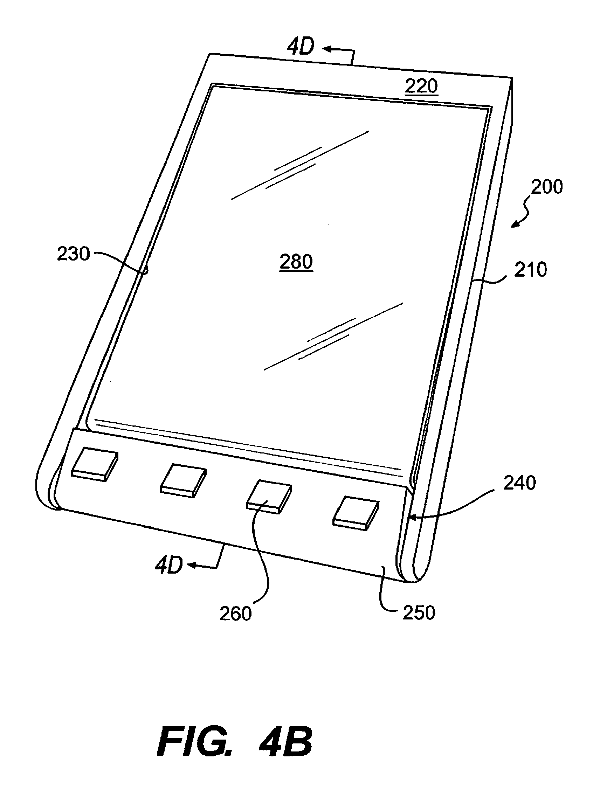

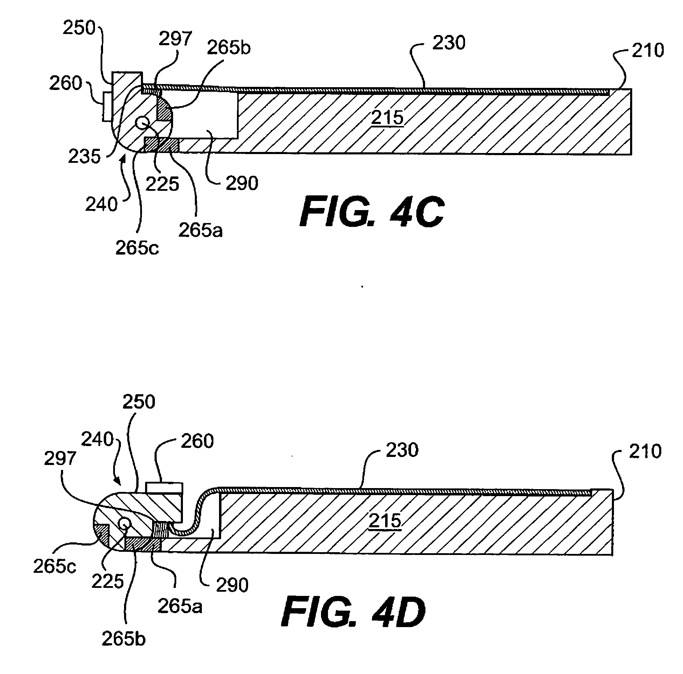

In this embodiment, input portion 240 is mounted to rotate relative to housing 210 between a first position shown in Figs. 4A and 4C, and a second position shown in Figs. 4B and 4D. In the first position shown in Figs. 4A and 4C, user interface surface 250 of input portion 240 is perpendicular to a front face 220 of device 200. In the second position shown in Figs. 4B and 4D, user interface area 250 is parallel to front face 220 of device 200 and disposed on front face 220 of device 200.

When input portion 240 is in the first position, a substantial portion of flexible display 230 is parallel to front face 220 of device 200 to define a first viewing area 270. When input portion 240 is in the second position shown in Fig. 4B, flexible display 230 defines a second viewing area 280 that is smaller than the first viewing area 270.

Referring to Figs. 4C-4D, an end of flexible display 230 is linked to input portion 240. When a user of handheld electronic device 200 manually engages input portion 240 and applies a sufficient force, input portion 240 rotates from the first position illustrated in Figs. 4A and 4C to the second position illustrated in Figs. 4B and 4D, and a portion of flexible display 230 is displaced into a recess 290 in an interior 215 of housing 210. In this manner, flexible display 230 moves from the first arrangement illustrated in Fig. 4A to the second arrangement illustrated in Fig 4B.

A suitable rotating arrangement allows input portion 240 to rotate, relative to housing 210, between the first position illustrated in Figs. 4A and 4C and the second position illustrated in Figs. 4B and 4D. In one example, the rotating arrangement includes a pin 225 projecting from opposite sides of input portion 240 and extending into similarly sized openings (not shown) in housing 210. Any suitable alternative arrangement may be used.

Handheld electronic device 200 also includes a retainer arrangement configured to releasably retain input portion 240 in the first position (illustrated in Figs. 4A and 4C) and in the second position (illustrated in Figs. 4B and 4D), respectively. Many retainer arrangements of handheld electronic devices are known to one of ordinary skill in the art and will not be described in detail herein. Any suitable arrangement may be used. In one example, the retainer arrangement includes a first magnet 265b and a second magnet 265c that are configured to magnetically couple input portion 240 to a magnet 265a disposed in interior 215 of housing 210 when input portion 240 is in the first position (Figs. 4A and 4C) and in the second position (Figs. 4B and 4D). In addition, a stop or limit 297 is provided on input portion 240 to prevent rotation of input portion 240 beyond the second position after being moved from the first position to the second position. In some examples, a similar stop or limit (not shown) is provided to prevent input portion 240 from rotating beyond the first position after being moved from the second position to the first position.

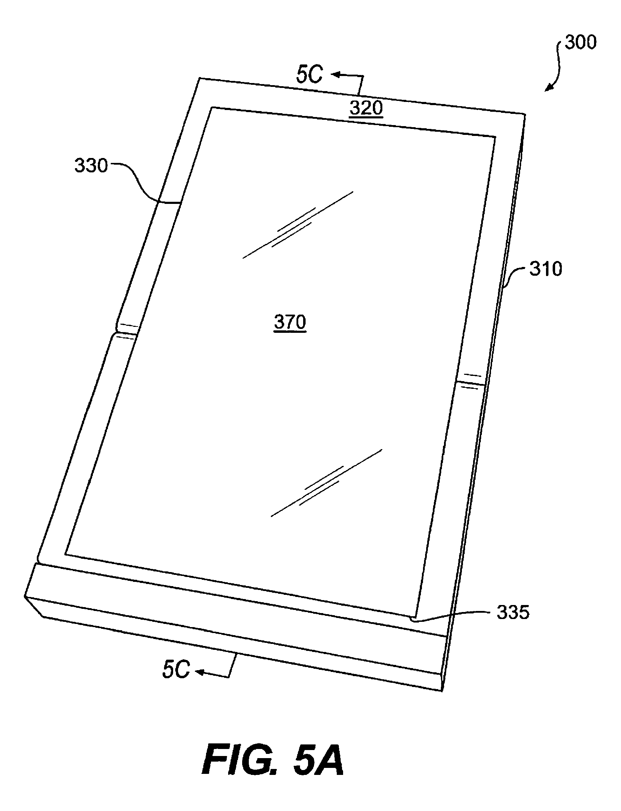

Referring to Figs. 5A-5E, a handheld electronic device 300 in accordance with a third embodiment will be described. Handheld electronic device 300 includes a housing 310, and an input portion 340 and a flexible display 330 associated with housing 310. Input portion 340 includes a user interface surface 350 having one or more input devices 360. It is contemplated that the one or more input devices 360 may include navigation keys and/or a keypad.

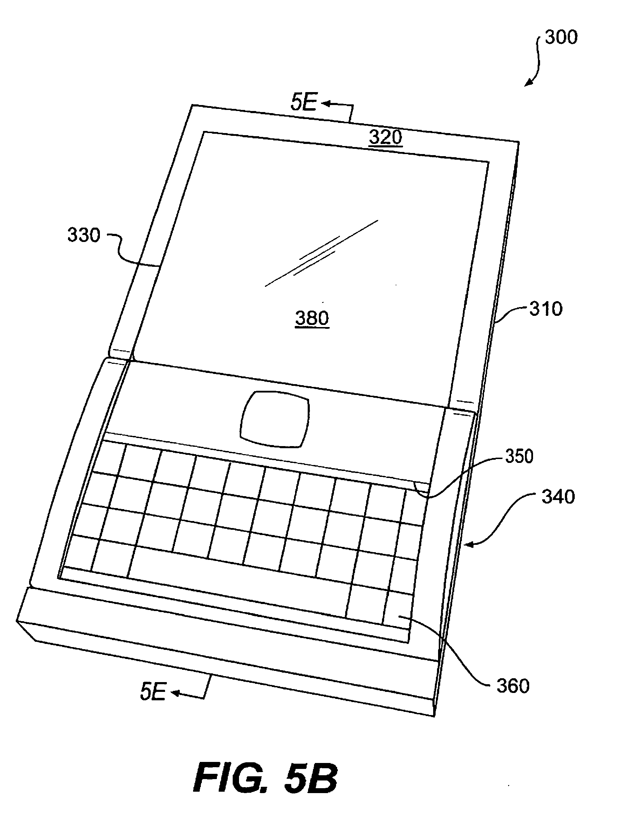

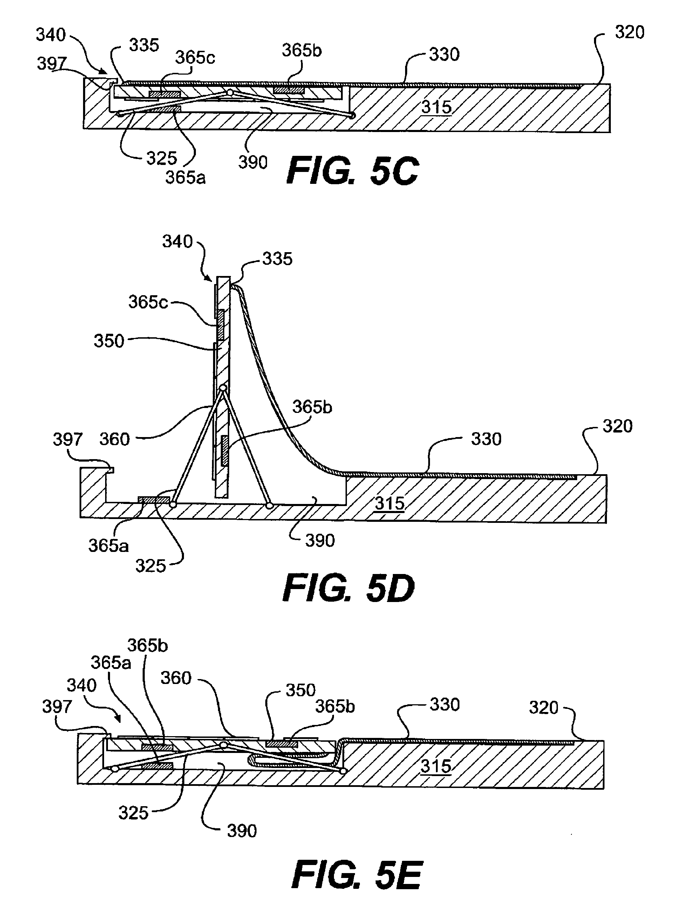

In this embodiment, input portion 340 is mounted to rotate relative to housing 310 between a first position shown in Figs. 5A and 5C, and a second position shown in Figs. 5B and 5E. In the first position shown in Figs. 5A and 5C, user interface surface 350 of input portion 340 is disposed in a recess 390 facing an interior 315 of housing 310. In the second position shown in Figs.5B and 5E, user interface area 350 of input portion 340 is substantially parallel to front face 320 of device 300 and disposed on front face 320 of device 300.

When input portion 340 is in the first position, a substantial portion of flexible display 330 is parallel to front face 320 of device 300 to define a first viewing area 370. When input portion 340 is in the second position shown in Figs. 5B and 5E, flexible display 330 defines a second viewing area 380 that is smaller than the first viewing area 370.

Referring to Figs. 5C-5E, an end of flexible display 330 is linked to input portion 340. Additionally, housing 310 includes a coupling movement mechanism 325 attached to input portion 340. Coupling movement mechanism 325 allows input portion 340 to pivot 180° relative to housing 310 between the first position illustrated in Figs. 5A and 5C and the second position illustrated in Figs. 5B and 5E. Many coupling movement mechanisms of handheld electronic devices are known to one of ordinary skill in the art and will not be described in detail herein. Any suitable mechanism may be used. In one example, coupling movement mechanism 325 may be a linkage mechanism including multiple gears (e.g., seven).

Handheld electronic device 300 also includes a retainer arrangement configured to releasably retain input portion 340 in the first position (Figs. 4A and 4C) and in the second position (Figs. 4B and 4D). Many retainer arrangements of handheld electronic devices are known to one of ordinary skill in the art and will not be described in detail herein. Any suitable arrangement may be used. In one example, input portion 340 includes one or more magnets 365b and 365c that are configured to magnetically couple input portion 340 to one or more magnets 365a disposed in recess 390 of housing 310 when input portion 340 is in the first position (Figs. 5A and 5C) and in the second position (Figs. 5B and 5D). In addition, coupling movement mechanism 325 includes a stop or limit 397 in the form of a releasable catch that movably extends into recess 390 and releasably engages input portion 340 thereby preventing movement of input portion 340 beyond the first position or the second position after being moved from one position to the other position.

When a user of handheld electronic device 300 manually engages input portion 340 and applies a sufficient force, input portion 340 rotates from the first position illustrated in Figs. 5A and 5C to the second position illustrated in Figs. 5B and 5E, and a portion of flexible display 330 is displaced into the recess 390 in the interior 315 of housing 310. In this manner, flexible display 330 moves from the first arrangement illustrated in Figs. 5A and 5C to the second arrangement illustrated in Figs. 5B and 5E.

The embodiments shown in the drawings allow users of the electronic handheld devices to select a desired flexible display area or a desired user interface surface without altering the overall dimensions of the handheld electronic device. In this manner, the handheld electronic devices are versatile while maintaining a small form factor.

While specific embodiments have been described in detail, it will be appreciated by those skilled in the art that various modifications and alternatives to those details could be developed in light of the overall teachings of the disclosure. Accordingly, the particular arrangements disclosed are meant to be illustrative only and not limiting.

## Claims

1. A handheld electronic device, comprising:
a housing (11, 110, 210, 310) having a front face;
a flexible display (13, 130, 230, 330) supported on the front face of the housing;
an input portion (14, 140, 240, 340) attached to the housing, the input portion being movable relative to the housing between a first position and a second position, wherein the input portion is disposed on the front face of the housing in the second position,
wherein the input portion is linked to the flexible display so that when the input portion moves between the first position and the second position a portion of the flexible display is rearranged relative to the front face of the housing,
wherein the portion of the flexible display is disposed in a recess in an interior of the housing when the input portion is in the second position;
and
wherein the flexible display has a first viewing area (17, 170, 270, 370) when the input portion is in the first position and a second viewing area (18, 180, 280, 380) when the input portion is in the second position, the second viewing area being smaller than the first viewing area.

2. The handheld electronic device of claim 1, wherein the device is configured such that, when the input portion is in the first position, a
length dimension of the flexible display substantially corresponds to a length dimension of the housing.

3. The handheld electronic device of claim 1, wherein the input portion defines a user interface surface (15, 150, 250, 350) that includes one or more input devices (16, 160, 260, 360), and wherein the user interface surface is not disposed on the front face of the handheld electronic device when the input portion is in the first position.

4. The handheld electronic device of claim 3, wherein a substantial portion of the user interface surface is disposed on the front face when the input portion is in the second position.

5. The handheld electronic device of claim 1, wherein exterior length, width, and height dimensions of the handheld electronic device are the same when the input portion is in the first position and the second position.

6. The handheld electronic device of claim 1, wherein the input portion and the flexible display are configured to move relative to the housing to provide a first arrangement of the flexible display in which a substantial portion of the flexible display is parallel to a front face of the handheld electronic device and a second arrangement of the flexible display in which a portion of the flexible display is disposed within the recess.

7. The handheld electronic device of claim 6, wherein the flexible display has the first viewing area in the first arrangement and the second viewing area in the second arrangement.

8. The handheld device of claim 7, wherein a length dimension of the first viewing area substantially corresponds to a length dimension of the housing.

9. The handheld electronic device of claim 6, wherein the input portion defines a user interface surface (15, 150, 250, 350) that includes one or more input devices (16, 160, 260, 360).

10. The handheld electronic device of claim 9, wherein the device is configured such that, when the flexible display is disposed within the recess, a substantial portion of the user interface surface of the input portion is disposed on the front face of the handheld electronic device.

11. The handheld electronic device of claim 6, wherein the input portion is configured to move between the first position and the second position to translate the display between first arrangement and the second arrangement.

12. The handheld electronic device of claim 8, wherein exterior length, width, and height dimensions of the handheld electronic device are the same when the flexible display is in the first arrangement and the second arrangement.

## Patentansprüche

1. Eine handgehaltene elektronische Vorrichtung, die aufweist:
ein Gehäuse (11, 110, 210, 310) mit einer Vorderseite;
eine flexible Anzeige (13, 130, 230, 330), die auf der Vorderseite des Gehäuses getragen wird;
einen Eingabeteil (14, 140, 240, 340), der an dem Gehäuse angebracht ist, wobei der Eingabeteil relativ zu dem Gehäuse zwischen einer ersten Position und einer zweiten Position bewegbar ist, wobei der Eingabeteil an der Vorderseite des Gehäuses in der zweiten Position angeordnet ist,
wobei der Eingabeteil mit der flexiblen Anzeige verbunden ist derart, dass,
wenn sich der Eingabeteil zwischen der ersten Position und der zweiten Position bewegt, ein Teil der flexiblen Anzeige relativ zu der Vorderseite des Gehäuses neu angeordnet wird,
wobei der Teil der flexiblen Anzeige in einer Ausnehmung in einem Inneren des Gehäuses angeordnet ist, wenn der Eingabeteil in der zweiten Position ist; und
wobei die flexible Anzeige einen ersten Betrachtungsbereich (17, 170, 270, 370) hat, wenn der Eingabeteil in der ersten Position ist, und einen zweiten Betrachtungsbereich (18, 180, 280, 380) hat, wenn der Eingabeteil in der zweiten Position ist, wobei der zweite Betrachtungsbereich kleiner ist als der erste Betrachtungsbereich.

2. Die handgehaltene elektronische Vorrichtung gemäß Anspruch 1, wobei die Vorrichtung derart konfiguriert ist, dass, wenn der Eingabeteil in der ersten Position ist, eine Längendimension der flexiblen Anzeige im Wesentlichen einer Längendimension des Gehäuses entspricht.

3. Die handgehaltene elektronische Vorrichtung gemäß Anspruch 1, wobei der Eingabeteil eine Benutzerschnittstellenoberfläche (15, 150, 250, 350) definiert, die eine oder mehrere Eingabevorrichtung(en) (16, 160, 260, 360) umfasst, und wobei die Benutzerschnittstellenoberfläche nicht auf der Vorderseite der handgehaltenen elektronischen Vorrichtung angeordnet ist, wenn der Eingabeteil in der ersten Position ist.

4. Die handgehaltene elektronische Vorrichtung gemäß Anspruch 3, wobei ein wesentlicher Teil der Benutzerschnittstellenoberfläche auf der Vorderseite angeordnet ist, wenn der Eingabeteil in der zweiten Position ist.

5. Die handgehaltene elektronische Vorrichtung gemäß Anspruch 1, wobei äußere Länge-, Breite- und Höhe-Dimensionen der handgehaltenen elektronischen Vorrichtung gleich sind, wenn der Eingabeteil in der ersten Position und der zweiten Position ist.

6. Die handgehaltene elektronische Vorrichtung gemäß Anspruch 1, wobei der Eingabeteil und die flexible Anzeige konfiguriert sind, sich relativ zu dem Gehäuse zu bewegen, um eine erste Anordnung der flexiblen Anzeige vorzusehen, bei der ein wesentlicher Teil der flexiblen Anzeige parallel zu einer Vorderseite der handgehaltenen elektronische Vorrichtung ist, und eine zweite Anordnung der flexiblen Anzeige vorzusehen, bei der ein Teil der flexiblen Anzeige in der Ausnehmung angeordnet ist.

7. Die handgehaltene elektronische Vorrichtung gemäß Anspruch 6, wobei die flexible Anzeige den ersten Betrachtungsbereich in der ersten Anordnung hat und den zweiten Betrachtungsbereich in der zweiten Anordnung.

8. Die handgehaltene elektronische Vorrichtung gemäß Anspruch 7, wobei eine Längendimension des ersten Betrachtungsbereichs im Wesentlichen einer Längendimension des Gehäuses entspricht.

9. Die handgehaltene elektronische Vorrichtung gemäß Anspruch 6, wobei der Eingabeteil eine Benutzerschnittstellenoberfläche (15, 150, 250, 350) definiert, die eine oder mehrere Eingabevorrichtung(en) (16, 160, 260, 360) umfasst.

10. Die handgehaltene elektronische Vorrichtung gemäß Anspruch 9, wobei die Vorrichtung derart konfiguriert, dass, wenn die flexible Anzeige in der Ausnehmung angeordnet ist, ein wesentlicher Teil der Benutzerschnittstellenoberfläche des Eingabeteils auf der Vorderseite der handgehaltenen elektronischen Vorrichtung angeordnet ist.

11. Die handgehaltene elektronische Vorrichtung gemäß Anspruch 6, wobei der Eingabeteil konfiguriert ist, sich zwischen der ersten Position und der zweiten Position zu bewegen, um die Anzeige zwischen der ersten Anordnung und der zweiten Anordnung zu verändern.

12. Die handgehaltene elektronische Vorrichtung gemäß Anspruch 8, wobei äußere Länge-, Breite- und Höhe-Dimensionen der handgehaltenen elektronischen Vorrichtung gleich sind, wenn die flexible Anzeige in der ersten Anordnung und der zweiten Anordnung ist.

## Revendications

1. Dispositif électronique tenu à la main, comprenant :
un boîtier (11, 110, 210, 310) ayant une face avant ;
un écran souple (13, 130, 230, 330) supporté sur la face avant du boîtier ;
une section d'entrée (14, 140, 240, 340) fixée au boîtier, la section d'entrée étant mobile par rapport au boîtier entre une première position et une seconde position, la section d'entrée étant disposée sur la face avant du boîtier dans la seconde position,
dans lequel la section d'entrée est liée à l'écran souple de façon que, lorsque la section d'entrée se déplace entre la première position et la seconde position, une partie de l'écran souple est réagencée par rapport à la face avant du boîtier,
dans lequel la partie de l'écran souple est disposée dans un évidement à l'intérieur du boîtier lorsque la section d'entrée est dans la seconde position, et
dans lequel l'écran souple possède une première zone (17, 170, 270, 370) de visualisation lorsque la section d'entrée est dans la première position et une seconde zone (18, 180, 280, 380) de visualisation lorsque la section d'entrée est dans la seconde position, la seconde zone de visualisation étant plus petite que la première zone de visualisation.

2. Dispositif électronique tenu à la main selon la revendication 1, le dispositif étant configuré de façon que, lorsque la section d'entrée est dans la première position, une dimension en longueur de l'écran souple correspond pratiquement à une dimension en longueur du boîtier.

3. Dispositif électronique tenu à la main selon la revendication 1, dans lequel la section d'entrée définit une surface (15, 150, 250, 350) d'interface d'utilisateur qui inclut un ou plusieurs dispositifs d'entrée (16, 160, 260, 360), et dans lequel la surface d'interface d'utilisateur n'est pas disposée sur la face avant du dispositif électronique tenu à la main lorsque la section d'entrée est dans la première position.

4. Dispositif électronique tenu à la main selon la revendication 3, dans lequel une partie substantielle de la surface d'interface d'utilisateur est disposée sur la face avant lorsque la section d'entrée est dans la seconde position.

5. Dispositif électronique tenu à la main selon la revendication 1, dans lequel les dimensions extérieures en longueur, en largeur et en hauteur du dispositif électronique tenu à la main sont les mêmes lorsque la section d'entrée est dans la première position et dans la seconde position.

6. Dispositif électronique tenu à la main selon la revendication 1, dans lequel la section d'entrée et l'écran souple sont configurés pour se déplacer par rapport au boîtier pour donner un premier agencement de l'écran souple dans lequel une partie substantielle de l'écran souple est parallèle à la face avant du dispositif électronique tenu à la main, et un second agencement de l'écran souple dans lequel une partie de l'écran souple est disposée à l'intérieur de l'évidement.

7. Dispositif électronique tenu à la main selon la revendication 6, dans lequel l'écran souple comporte la première zone de visualisation dans le premier agencement et la seconde zone de visualisation dans le second agencement.

8. Dispositif électronique tenu à la main selon la revendication 7, dans lequel une dimension en longueur de la première zone de visualisation correspond substantiellement à une dimension en longueur du boîtier.

9. Dispositif électronique tenu à la main selon la revendication 6, dans lequel la section d'entrée définit une surface (15, 150, 250, 350) d'interface d'utilisateur qui inclut un ou plusieurs dispositifs d'entrée (16, 160, 260, 360).

10. Dispositif électronique tenu à la main selon la revendication 9, le dispositif étant configuré de façon que, lorsque l'écran souple est disposé à l'intérieur de l'évidement, une partie substantielle de la surface d'interface d'utilisateur de la section d'entrée est disposée sur la face avant du dispositif électronique tenu à la main.

11. Dispositif électronique tenu à la main selon la revendication 6, dans lequel la section d'entrée est configurée pour se déplacer entre la première position et la seconde position pour opérer le mouvement de translation de l'écran entre le premier agencement et le second agencement.

12. Dispositif électronique tenu à la main selon la revendication 8, dans lequel les dimensions extérieures en longueur, en largeur et en hauteur du dispositif électronique tenu à la main sont les mêmes lorsque l'écran souple est dans le premier agencement et dans le second agencement.
